# DEMANDE DE BREVET EUROPEEN

(11) **EP 3 909 823 A1**
(43) Date de publication de la demande: **17.11.2021**
(21) Numéro de dépôt: 21170666.8
(22) Date de dépôt: 27.04.2021
(51) Int. Cl.: B60W 30/194, B60W 50/08, B60W 50/12, B60W 50/14, F02N 11/08, B60K 35/00, B60W 10/11

(54) **PROCÉDÉ DE COMMANDE DU DÉMARRAGE D'UN VÉHICULE AUTOMOBILE ÉQUIPÉ D'UNE BOÎTE DE VITESSES AUTOMATIQUE ET D'UN SYSTÈME DE POST-TRAITEMENT DES GAZ D'ÉCHAPPEMENT**

(30) Priorité: 12.05.2020 FR 2004647
(71) Demandeur: RENAULT s.a.s., 92100 Boulogne-Billancourt (FR)
(72) Inventeur: BEN-KHALIFA, Ayoub, 92800 Puteaux (FR)

(57) **Abrégé**

Procédé de commande du démarrage d'un véhicule équipé d'un groupe motopropulseur comportant un moteur thermique et une boîte de vitesses automatique (BVA) associée à un levier de commande pour la sélection de différents modes de fonctionnement de la BVA, d'un système de post-traitement des gaz d'échappement, d'une pédale de frein, d'une unité d'affichage. Le procédé de commande comprend des étapes successives: démarrage du moteur thermique, actionnement de la pédale de frein, sélection d'un mode de fonctionnement de la BVA au moyen du levier de commande, engagement du mode sélectionné de fonctionnement de la BVA. Préalablement à l'étape d'engagement de la BVA, le procédé de commande comporte une étape de détermination d'un état de fonctionnement admissible du système de post-traitement en fonction de la valeur d'un paramètre représentatif, et, tant que la valeur dudit paramètre ne correspond pas auxdites conditions déterminées, l'étape d'engagement de la BVA est inhibée.

## Description

### Domaine technique de l'invention

La présente invention concerne le domaine du contrôle des émissions de particules polluantes des moteurs thermiques.

L'invention concerne plus particulièrement un procédé de commande du démarrage d'un véhicule automobile équipé d'une boîte de vitesses automatique et d'un système de post-traitement des gaz d'échappement.

### Arrière-plan technique

L'évolution des normes de dépollution encourage fortement à maitriser les émissions de particules polluantes tout au long du cycle de vie d'un véhicule. De nos jours, de nombreux véhicules comportant un moteur thermique essence ou bien diesel et une boîte de vitesses automatique (BVA) sont équipés d'un dispositif de post-traitement des gaz d'échappement implanté à la sortie du moteur thermique et assurant la dépollution des gaz d'échappement.

Le démarrage à froid d'un véhicule est une phase de fonctionnement relativement critique et impactante pour le bilan d'émissions de particules polluantes du véhicule.

Lors du démarrage à froid du moteur du véhicule, également appelé premier démarrage, c'est-à-dire lorsque la température du moteur thermique n'est pas suffisamment élevée, le système de post-traitement des gaz d'échappement ne fonctionne pas dans des conditions optimales. Notamment, sa température de fonctionnement est insuffisante.

Il y a donc une phase transitoire correspondant à la durée nécessaire pour que le système de post-traitement des gaz d'échappement atteigne une température d'efficacité de dépollution.

Pendant cette phase transitoire, les émissions de particules polluantes peuvent atteindre des seuils critiques en fonction notamment du profil de roulage du véhicule.

Lors du démarrage à froid du moteur thermique du véhicule, il est donc indispensable de garder le véhicule à l'arrêt avec le moteur thermique découplé des roues du véhicule pendant au moins une partie de la durée de la phase transitoire afin d'appliquer des stratégies de réduction des émissions de particules polluantes au moyen de lois de combustion spécifiques.

Néanmoins, durant cette phase de dépollution spécifique, aucun dispositif implanté dans un véhicule équipé d'une boîte de vitesses automatique n'empêche l'engagement d'un mode de fonctionnement de la boîte de vitesses automatique à partir du levier de commande et le démarrage du véhicule.

Ceci est à l'origine d'une hausse considérable des quantités de particules polluantes émises par le véhicule.

La présente invention a pour but d'apporter une solution à ce problème.

### Résumé de l'invention

L'invention propose un procédé de commande du démarrage d'un véhicule équipé :
- d'un groupe motopropulseur comportant :
   -- un moteur thermique,
   -- et une boîte de vitesses automatique associée à un levier de commande pour la sélection de différents modes de fonctionnement de la boîte de vitesses automatique ;
- d'un système de post-traitement des gaz d'échappement du moteur thermique;
- d'une pédale de frein ;
- et d'une unité d'affichage d'informations à destination du conducteur du véhicule.

Le procédé de commande comprend des étapes successives :
- démarrage du moteur thermique,
- actionnement de la pédale de frein,
- sélection d'un mode de fonctionnement de la boîte de vitesses automatique au moyen du levier de commande,
- engagement du mode sélectionné de fonctionnement de la boîte de vitesses automatique.

Le procédé de commande du démarrage d'un véhicule est caractérisé en ce que :
- préalablement à l'étape d'engagement du mode sélectionné de fonctionnement de la boîte de vitesses automatique, le procédé de commande comporte une étape de détermination d'un état de fonctionnement admissible du système de post-traitement en fonction de la valeur d'un paramètre représentatif de cet état de fonctionnement ;
- et tant que la valeur dudit paramètre ne correspond pas auxdites conditions déterminées de fonctionnement admissible du système de post-traitement, l'étape d'engagement du mode sélectionné de fonctionnement de la boîte de vitesses automatique est inhibée.

Ainsi, lors du démarrage d'un véhicule, l'invention assure l'immobilisation du véhicule tant que le système de post-traitement des gaz d'échappement n'a pas atteint des conditions de fonctionnement optimales.

Selon d'autres caractéristiques de l'invention :
- le procédé de commande du démarrage d'un véhicule comporte une étape d'affichage sur l'unité d'affichage d'un message d'avertissement demandant au conducteur de patienter jusqu'à ce que la valeur dudit paramètre corresponde auxdites conditions déterminées de fonctionnement admissible du système de de post-traitement ;
- ledit paramètre est une température de fonctionnement du système de post-traitement ;
- pendant la durée d'inhibition de l'étape d'engagement du mode sélectionné de fonctionnement de la boîte de vitesses automatique, le procédé de commande du démarrage d'un véhicule comporte une étape d'engagement forcé du mode sélectionné de fonctionnement de la boîte de vitesses automatique en réponse à une action du conducteur consistant à maintenir le levier de commande dans ladite position de boîte de vitesses automatique pendant une durée minimale déterminée,
- ledit message d'avertissement comporte une information relative à la possibilité de mise en œuvre par le conducteur de l'étape d'engagement forcé du mode sélectionné de fonctionnement de la boîte de vitesses automatique.

Le procédé de commande du démarrage d'un véhicule équipé d'une boîte de vitesses automatique selon l'invention permet d'obliger et/ou d'inciter le conducteur à maintenir son véhicule à l'arrêt pendant la durée nécessaire au système de post-traitement des gaz d'échappement pour atteindre des conditions de fonctionnement optimales.

De plus, si le système de post-traitement n'a pas atteint des conditions de fonctionnement optimales, le procédé de commande du démarrage selon l'invention offre au conducteur la possibilité de démarrer son véhicule en effectuant une manipulation spécifique.

### Brève descriptions des figures

D'autres caractéristiques et avantages de l'invention apparaitront au cours de la lecture de la description détaillée qui va suivre pour la compréhension de laquelle on se reportera aux dessins annexés dans lesquels :
[Fig.1] - la figure 1 est une représentation schématique de l'agencement et de l'interaction des principaux éléments intervenant dans le processus de démarrage d'un véhicule selon l'état de la technique ;
[Fig.2] - la figure 2 est un logigramme des étapes du procédé de commande du démarrage d'un véhicule selon l'invention ;
[Fig.3] - la figure 3 est une représentation schématique d'un premier scénario de démarrage d'un véhicule selon le procédé de commande du démarrage selon l'invention ;
[Fig.4] - la figure 4 est une représentation schématique analogue à celle de la figure 3 illustrant un second scénario de démarrage ;

### Description détaillée de l'invention

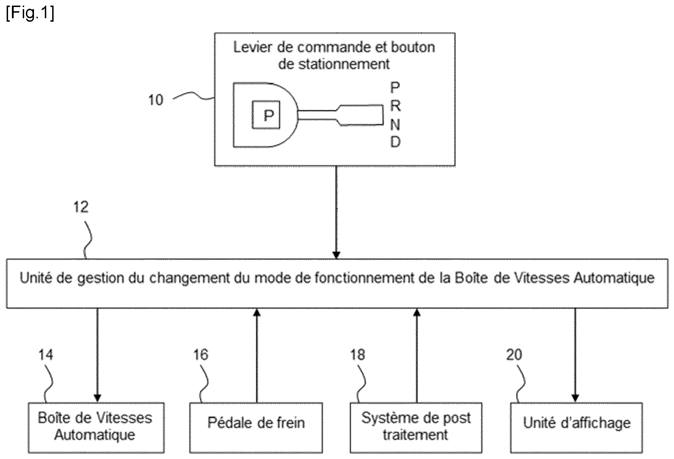

Dans la description qui va suivre, des éléments identiques, similaires ou analogues seront désignés par les mêmes références alphanumériques. Les éléments principaux illustrés à la figure 1 sont :
- un levier de commande 10 à partir duquel le conducteur a la possibilité de sélectionner les positions suivantes :
   -- P signifiant Park et correspondant au mode de parking aussi appelée position de stationnement
   -- R signifiant Reverse et correspondant à un démarrage en marche arrière,
   -- N signifiant Neutre et correspondant au point mort,
   -- D signifiant Drive et correspondant à un démarrage en marche avant ;
- une unité de gestion 12 du changement du mode de fonctionnement de la boîte de vitesses automatique 14, également appelée un système de gestion de changement des modes de GSM (Gear Shift Management) ;
- une boîte de vitesses automatique 14 associée au levier de commande 10 pour la sélection de ses différents modes de fonctionnement ;
- une pédale de frein 16 ;
- un système de post-traitement 18 des gaz d'échappement du moteur thermique 26 ;
- une unité d'affichage 20 d'informations à destination du conducteur du véhicule.

La figure 1 illustre le rôle de l'unité de gestion 12 du changement du mode de fonctionnement de la boîte de vitesses automatique 14 par rapport aux interactions entre ces différents éléments intervenant dans le processus de démarrage d'un véhicule équipé d'une boîte de vitesses automatique 14. L'unité de gestion 12 du changement du mode de fonctionnement de la boîte de vitesses automatique 14 reçoit et transmet des informations suivant un ordre déterminé.

Les étapes d'interactions ont lieu dans l'ordre suivant :
- le levier de commande 10 envoie une donnée à l'unité de gestion 12 concernant la position du levier de commande 10 associée à un mode sélectionné de fonctionnement de la boîte de vitesses automatique 14 (P, R, N ou D) ;
- l'unité de gestion 12 transmet la donnée concernant la position du levier de commande 10 à la boîte de vitesses automatique 14 afin que la boîte de vitesses automatique 14 s'engage dans le mode sélectionné de fonctionnement ;
- la pédale de frein 16 envoie une donnée à l'unité de gestion 12 concernant la position de la pédale de frein 16, c'est-à-dire si celle-ci est actionnée ou non ;
- le système de post-traitement 18 des gaz d'échappement envoie une donnée à l'unité de gestion 12 concernant l'état de fonctionnement du système de post-traitement 18 ;
- l'unité d'affichage 20 reçoit des informations de la part de l'unité de gestion 12 afin d'informer et de guider le conducteur au cours du processus de démarrage du véhicule.

Le procédé de commande du démarrage selon l'invention intègre une fonction ayant pour but de maintenir l'immobilisation du véhicule tout au long de la phase de transition, jusqu'à ce que le système de post-traitement 18 des gaz d'échappement atteigne à un état de fonctionnement admissible. Cette fonction est implémentée dans l'unité de gestion 12 du changement du mode de fonctionnement de la boîte de vitesses automatique 14 et transmet les données représentatives de l'état de fonctionnement du système de post-traitement 18 des gaz d'échappement.

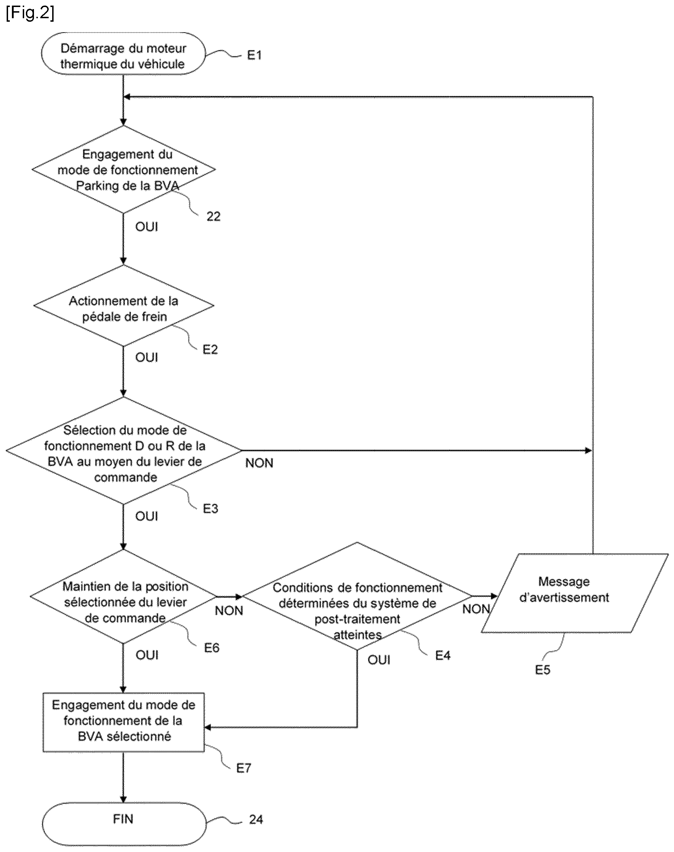

La figure 2 illustre le procédé de commande du démarrage d'un véhicule équipé d'une boîte de vitesses automatique 14 selon l'invention. Le procédé de démarrage du véhicule peut être « normal » avec une phase de transition selon l'invention, ou bien « forcé » avec inhibition de la phase transitoire. Les étapes successives du procédé de démarrage normal sont les suivantes :
- E1 : Démarrage du moteur thermique 26 du véhicule.
Lors du démarrage du moteur thermique 26 du véhicule, la boîte de vitesses automatique 14 doit être engagée dans un mode de fonctionnement associé à une position stable, c'est-à-dire à la position neutre N ou bien à la position parking P du levier de commande 10 ;
- 22 : Test de l'engagement du mode de fonctionnement Parking de la boîte de vitesses automatique 14 ;
- E2 : Actionnement de la pédale de frein 16.

La pédale de frein 16 doit être obligatoirement actionnée afin d'accéder à l'étape suivante ;
- E3 : Sélection d'un mode de fonctionnement de la boîte de vitesses automatique 14 correspondant à une mise en mouvement du véhicule, tel que le mode Drive ou le mode Reverse par impulsion au moyen du levier de commande 10,
- E4 : Détermination d'un état de fonctionnement admissible du système de post-traitement 18 des gaz d'échappement en fonction de la valeur d'un paramètre représentatif de cet état de fonctionnement :
   -- lorsque les conditions de fonctionnement déterminées du système de post-traitement 18 sont atteintes :
- E7 : Engagement du mode sélectionné de fonctionnement de la boîte de vitesses automatique 14 ;
- 24 : Fin du procédé de commande du démarrage d'un véhicule.
   -- tant que les conditions de fonctionnement déterminées du système de post-traitement 18 ne sont pas atteintes :
      E5 : Affichage d'un message d'avertissement sur l'unité d'affichage 20 demandant au conducteur de patienter jusqu'à ce que la valeur dudit paramètre corresponde auxdites conditions déterminées de fonctionnement admissible du système de post-traitement 18.

A la suite de l'étape E5, le procédé de commande du démarrage retourne à l'étape 22.

Les étapes successives du procédé de démarrage forcé sont les suivantes :
- 22 : Test de l'engagement du mode de fonctionnement Parking de la boîte de vitesses automatique 14 ;
- E2 : Actionnement de la pédale de frein 16;
- E3 : Sélection d'un mode de fonctionnement de la boîte de vitesses automatique 14 correspondant à une mise en mouvement du véhicule, tel que le mode Drive ou le mode Reverse au moyen du levier de commande 10;
- E6 : Maintien du levier de commande 10 dans la position sélectionnée à l'étape E3, pendant une durée minimale déterminée, afin de forcer l'engagement de la boîte de vitesses automatique 14 dans le mode sélectionné de fonctionnement ;
- E7 : Engagement du mode sélectionné de fonctionnement de la boîte de vitesses automatique 14;
- 24 : Fin du procédé de commande du démarrage d'un véhicule.

Lors du démarrage d'un véhicule équipé d'une boîte de vitesses automatique 14 selon l'état de la technique, les demandes du conducteur au moyen de la combinaison du levier de commande 10 et de l'actionnement de la pédale sont traduites, et exécutées, dès lors qu'un mode de fonctionnement de la boîte de vitesses automatique 14 est sélectionné.

Toutefois, la fonction de maintien à l'arrêt du procédé de commande du démarrage selon l'invention s'oppose à toutes les demandes d'engagement d'un mode sélectionné de fonctionnement de la boîte de vitesses automatique 14 correspondant à une mise en mouvement du véhicule, tel que le mode Drive ou le mode Reverse, au moyen du levier de commande 10 afin d'éviter le roulage du véhicule tout au long de la phase de transition durant laquelle le système de post-traitement 18 évolue pour atteindre un état de fonctionnement admissible.

L'étape E4 de détermination d'un état de fonctionnement admissible du système de post-traitement 18 et l'étape E6 d'engagement forcé de la boîte de vitesses automatique 14 sont les étapes caractéristiques, indépendantes, du procédé selon l'invention de commande du démarrage d'un véhicule équipé d'une boîte de vitesses automatique 14.

A chaque réalisation de l'étape E3 de sélection d'un mode de fonctionnement de la boîte de vitesses automatique 14 de manière ponctuelle par impulsion et non maintenue, une fonction implémentée dans l'unité de gestion 12 analyse l'état du système de post-traitement 18 des gaz d'échappement en fonction de la valeur d'un paramètre représentatif de cet état de fonctionnement.

L'unité de gestion 12 détermine si des conditions déterminées de fonctionnement sont atteintes ou non.

Selon un mode de réalisation de l'invention, le paramètre de fonctionnement est une température de fonctionnement du système de post-traitement 18. Néanmoins, le procédé de commande du démarrage d'un véhicule selon l'invention peut être associé à un autre paramètre de fonctionnement représentatif de l'état de fonctionnement du système de post-traitement 18. Lorsque les conditions de fonctionnement déterminées sont atteintes, alors la boîte de vitesses automatique 14 s'engage dans le mode sélectionné.

Si les conditions de fonctionnement déterminées ne sont pas atteintes, alors un message d'avertissement s'affiche sur l'unité d'affichage 20 demandant au conducteur de patienter jusqu'à ce que la valeur du paramètre corresponde aux conditions déterminées de fonctionnement admissible du système de post-traitement 18.

Selon un mode de réalisation de l'invention le message d'avertissement comporte une donnée relative à la possibilité de mise en œuvre de l'étape d'engagement forcé du mode sélectionné de fonctionnement de la boîte de vitesses automatique 14.

Lorsque le procédé prévoit un démarrage en mode forcé, le message comporte une énumération des actions spécifiques à réaliser afin de forcer l'engagement de la boîte de vitesses automatique 14, sans attendre.

Dans ce but, le conducteur effectue les mêmes étapes E1, E2 et E3 du procédé de démarrage et il doit maintenir la position sélectionnée au moyen du levier de commande 10 pendant une durée minimale déterminée indiquée dans le message d'avertissement afin de réaliser l'étape E6 de forçage de l'engagement de la boîte de vitesses automatique 14.

Les étapes E4 et E5 sont alors inhibées et le véhicule peut démarrer suivant le mode sélectionné de fonctionnement de la boîte de vitesses automatique 14.

Ainsi, dans une situation d'urgence, le conducteur a la possibilité d'engager la boîte de vitesses automatique 14 dans un mode de fonctionnement tel que Drive ou bien Reverse en suivant une manipulation explicitée par l'unité d'affichage 20, même si le système de post-traitement 18 n'est pas prêt. Selon un mode de réalisation de l'invention, la durée nécessaire du maintien du levier de commande 10 dans une position sélectionnée est égale à trois secondes.

Cette valeur est une estimation de la temporisation de confirmation qui permet de réduire l'occurrence des actions involontaires effectuées au moyen du levier de commande 10.

Néanmoins, la durée nécessaire du maintien du levier de commande peut être réglée sur une autre valeur.

Selon un mode de réalisation non représenté de l'invention, et si les conditions de fonctionnement déterminées du système de post-traitement 18 ne sont pas atteintes, l'affichage du message d'avertissement sur l'unité d'affichage 20 est réalisé dès le démarrage du moteur thermique 26. L'étape E4 de détermination d'un état de fonctionnement admissible du système de post-traitement 18 des gaz d'échappement succède alors directement l'étape E1 de démarrage du moteur thermique 26.

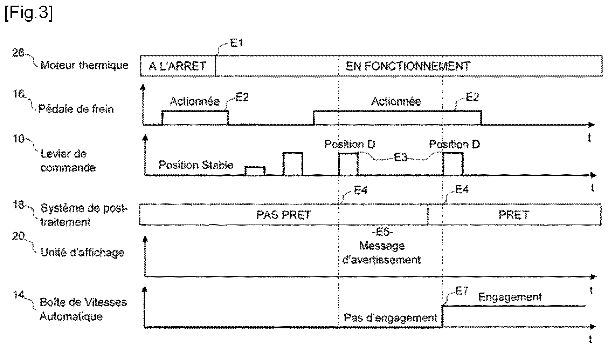

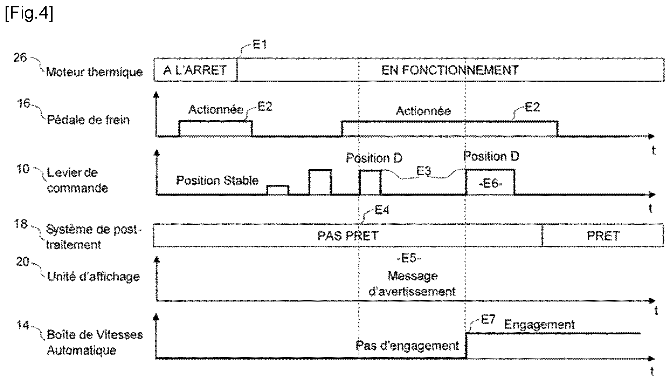

Les figures 3 et 4 illustrent deux scénarios de démarrage d'un véhicule équipé du procédé de commande du démarrage selon l'invention.

Le procédé de commande du démarrage d'un véhicule est lié à l'état de fonctionnement des organes du véhicule intervenant dans le processus du démarrage.

Les organes correspondants associés à leurs différents états de fonctionnement possible sont les suivants:
- moteur thermique 26 : à l'arrêt ou en fonctionnement,
- pédale de frein 16 : actionnée ou non,
- levier de commande 10 : position stable correspondant aux positions Neutre et Parking ou Position Drive,
- système de post-traitement 18 : pas prêt si les conditions de fonctionnement déterminées du système de post-traitement 18 ne sont pas encore atteintes ou prêt si les conditions déterminées de fonctionnement sont atteintes,
- boîte de vitesses automatique 14 : pas engagement du mode sélectionné de fonctionnement de la boîte de vitesses automatique 14 ou engagement du mode sélectionné de fonctionnement de la boîte de vitesses automatique 14,
- message d'avertissement : le message d'avertissement conseille au conducteur de patienter jusqu'à ce que le système de de post-traitement 18 soit prêt ; le message d'avertissement peut également détailler la mise en œuvre de l'étape d'engagement forcé du mode sélectionné de fonctionnement de la boîte de vitesses automatique 14.

Chaque scénario de démarrage d'un véhicule comporte quatre tentatives de démarrage, seule la quatrième tentative de démarrage diffère entre les deux scénarios de démarrages représentés aux figures 3 et 4.

Selon une direction de lecture de gauche à droite, les tentatives de démarrage sont les suivantes :

### Première tentative de démarrage :

- moteur thermique 26 à l'arrêt,
- pédale de frein 16 actionnée : étape E2,
- levier de commande 10 en position stable.

Rien ne se produit au niveau des autres organes intervenant dans le processus de démarrage car le moteur thermique 26 est à l'arrêt.

### Deuxième tentative de démarrage :

- moteur thermique 26 en fonctionnement : étape E1,
- pédale de frein 16 pas actionnée,
- position non stable du levier de commande 10 sélectionnée.

Rien ne se produit au niveau des autres organes intervenant dans le processus de démarrage car la pédale de frein 16 n'est pas actionnée, cet actionnement est indispensable pour que la demande d'engagement de la boîte de vitesses automatique 14 dans une position sélectionnée au moyen du levier de commande 10 soit prise en compte.

### Troisième tentative de démarrage :

- moteur thermique 26 en fonctionnement : étape E1,
- pédale de frein 16 actionnée : étape E2,
- position D sélectionnée du levier de commande 10 : étape E3,
- système de post-traitement 18 pas prêt : étape E4,
- les conditions de fonctionnement déterminées du système de post-traitement 18 ne sont pas atteintes.
- affichage d'un message d'avertissement sur l'unité d'affichage 20: étape E5.

Pas d'engagement du mode sélectionné de fonctionnement de la boîte de vitesses automatique 14, le véhicule ne démarre pas.

**Quatrième tentative de démarrage** du scénario de démarrage représenté à la figure 3 :
- moteur thermique 26 en fonctionnement : étape E1,
- pédale de frein 16 actionnée : étape E2,
- position D sélectionnée du levier de commande 10 : étape E3,
- système de post-traitement 18 prêt : étape E4,
- les conditions de fonctionnement déterminées du système de post-traitement 18 sont atteintes,
- engagement du mode sélectionné de fonctionnement de la boîte de vitesses automatique 14 : étape E7.

Le véhicule démarre.

Dans le scénario de démarrage représenté à la figure 3, le conducteur patiente jusqu'à ce que le système de post-traitement 18 soit prêt avant de réitérer une tentative de démarrage, le véhicule démarre à l'issue de cette dernière tentative.

**Quatrième tentative de démarrage** du scénario de démarrage représenté à la figure 4 :
- moteur thermique 26 en fonctionnement : étape E1,
- pédale de frein 16 actionnée : étape E2,
- position D sélectionnée du levier de commande 10 : étape E3,
- maintien de la position sélectionnée du levier de commande 10 pendant un temps déterminé : étape E6
- engagement du mode sélectionné de fonctionnement de la boîte de vitesses automatique 14 : étape E7.

Le véhicule démarre.

Dans le scénario de démarrage représenté à la figure 4, le conducteur force l'étape d'engagement de la boîte de vitesses automatique 14 dans un mode sélectionné de fonctionnement en suivant la procédure indiquée par le message d'avertissement. Le véhicule démarre à l'issue de cette ultime tentative.

### LEGENDES :

10 : levier de commande
12 : unité de gestion
14 : boîte de vitesses automatique
16 : pédale de frein
18 : système de post-traitement
20 : unité d'affichage
22 : engagement du mode de fonctionnement parking
24 : fin
26 : moteur thermique
E1 : démarrage du moteur thermique
E2 :actionnement de la pédale de frein
E3 :sélection d'un mode de fonctionnement de la boîte de vitesses automatique
E4 : détermination d'un état de fonctionnement admissible du système de post-traitement
E5 : affichage d'un message d'avertissement
E6 : engagement forcé de la boîte de vitesses automatique
E7 : engagement du mode sélectionné de fonctionnement

## Revendications

1. Procédé de commande du démarrage d'un véhicule équipé :
- d'un groupe motopropulseur comportant :
-- un moteur thermique (26),
-- et une boîte de vitesses automatique (14) associée à un levier de commande (10) pour la sélection de différents modes de fonctionnement de la boîte de vitesses automatique (14) ;
- d'un système de post-traitement (18) des gaz d'échappement du moteur thermique (26);
- d'une pédale de frein (16) ;
- et d'une unité d'affichage (20) d'informations à destination du conducteur du véhicule,
le procédé de commande comprenant des étapes successives :
- E1) de démarrage du moteur thermique (26),
- E2) d'actionnement de la pédale de frein (16),
- E3) de sélection d'un mode de fonctionnement de la boîte de vitesses automatique (14) au moyen du levier de commande (10),
- E7) d'engagement du mode sélectionné de fonctionnement de la boîte de vitesses automatique (14);
**caractérisé :**
- **en ce que**, préalablement à l'étape E7) d'engagement du mode sélectionné de fonctionnement de la boîte de vitesses automatique (14), le procédé de commande comporte une étape E4) de détermination d'un état de fonctionnement admissible du système de post-traitement (18) en fonction de la valeur d'un paramètre représentatif de cet état de fonctionnement,
- et **en ce que**, tant que la valeur dudit paramètre ne correspond pas auxdites conditions déterminées de fonctionnement admissible du système de post-traitement (18), l'étape E7) d'engagement du mode sélectionné de fonctionnement de la boîte de vitesses automatique (14) est inhibée.

2. Procédé de commande du démarrage d'un véhicule selon la revendication 1, **caractérisé en ce qu'**il comporte une étape E5) d'affichage d'un message d'avertissement sur l'unité d'affichage (20) demandant au conducteur de patienter jusqu'à ce que la valeur dudit paramètre corresponde auxdites conditions déterminées de fonctionnement admissible du système de de post-traitement (18).

3. Procédé de commande du démarrage d'un véhicule selon l'un des revendications 1 ou 2, **caractérisé en ce que** ledit paramètre est une température de fonctionnement du système de post-traitement (18).

4. Procédé de commande du démarrage d'un véhicule selon l'une quelconque des revendications précédentes, **caractérisé en ce que** pendant la durée d'inhibition de l'étape E7) d'engagement du mode sélectionné de fonctionnement de la boîte de vitesses automatique (14), le procédé de commande comporte une étape E6) d'engagement forcé du mode sélectionné de fonctionnement de la boîte de vitesses automatique (14) en réponse à une action du conducteur consistant à maintenir le levier de commande (10) dans ladite position de boîte de vitesses automatique (14) pendant une durée minimale déterminée.

5. Procédé de commande du démarrage d'un véhicule selon la revendication 4 prise en combinaison avec la revendication 2, **caractérisé en ce que** ledit message d'avertissement comporte une information relative à la possibilité de mise en œuvre par le conducteur de l'étape E7) d'engagement forcé du mode sélectionné de fonctionnement de la boîte de vitesses automatique (14).
